# EUROPEAN PATENT SPECIFICATION

(11) **EP 2 341 522 B1**
(45) Date of publication and mention of the grant of the patent: **03.04.2013**
(21) Application number: 10196449.2
(22) Date of filing: 22.12.2010
(51) Int. Cl.: H01H 71/14

(54) **Fusing device and battery assembly comprising the same**
Sicherungsvorrichtung und damit versehene Batterieanordnung
Dispositif fusible et ensemble de batterie le comportant

(30) Priority: 31.12.2009 CN 200910238943
(43) Date of publication of application: 06.07.2011
(73) Proprietor: Byd Company Limited, Shenzhen 518118 (CN)
(72) Inventor: Tong, Zhiwei, 518118 Shenzhen (CN); Zheng, Weixin, 518118 Shenzhen (CN); Zhu, Jianhua, 518118 Shenzhen (CN)
(74) Representative: Gulde Hengelhaupt Ziebig & Schneider

(56) References cited:
- WO-A1-99/54904
- WO-A1-03/067621
- US-A- 3 832 243
- DATABASE WPI Week 198115 Thomson Scientific, London, GB; AN 1981-D3180D XP002628999 -& SU 748 556 A2 (BOLOSOV V K) 15 July 1980 (1980-07-15)
- DATABASE WPI Week 197919 Thomson Scientific, London, GB; AN 1979-E2497B XP002629000 -& SU 613 417 A1 (BOLOSOV V K) 30 June 1978 (1978-06-30)

## Description

### CROSS-REFERENCE TO RELATED APPLICATION

The present application claims priority to and benefits of Chinese Patent Application No. 200910238943.7, filed with the State Intellectual Property Office of the People's Republic of China (SIPO) on December 31, 2009.

### FIELD

The disclosure relates to electrical safety, more particularly to a fusing device for protecting electrical connection, such as circuit, battery pack etc. and a battery assembly comprising the same.

### BACKGROUND

Fusing devices are widely used in electric systems for short circuit protection, over current protection or over heat protection etc. The common fusing device, such as thermal cutoff or fuse, may be blown out when a part of an electrical connection is overheated. For example, a metallic melt having high melting point and small conductive area is used as a fuse, and it may be melted to break the connection at a certain large current.

Such fusing devices have the shortcomings of high internal resistance, short responding time which may cause unintentional fusing breaks, and in addition, the fusing device may not bear pulse current with a low duty ratio but an extremely large instantaneous current, which normally in an electric vehicle system, is a commonly occurred event. These may bring involuntary maintenance or frequent system halts.

Document SU 613 417 A1 describes a fusing device comprising:
a core portion (2, 3), a first flange (the left flange) at an end thereof and a second flange (the right flange 3) at the other end thereof;
a first terminal electrically connected with the end of the core portion (2, 3) where the first flange is;
a second terminal electrically connected with the other end of the core portion (2, 3) where the second flange (3) is; and
at least a thermal expanding element (1) provided between the first flange and the second flange (3) with two ends thereof against the first and second flanges respectively, which is configured to break the core portion (2, 3) during thermal expanding.

### SUMMARY

In viewing thereof, the present disclosure is directed to solve at least one of the problems existing in the prior art. Accordingly, a fusing device may be provided, which may be easily assembled with reduced cost in addition to enhanced instantaneous over-current tolerance. Further, a battery assembly comprising the same may also need to be provided.

According to an aspect of the disclosure, a fusing device according to claim 1 is provided.

According to an aspect of the disclosure, a battery assembly comprising a plurality of batteries electrically connected in series, in parallel or in series and parallel with the fusing device as described hereinabove is also provided.

According to the present disclosure, due to the thermal expanding element, the fusing device will function only after constant over-current, rather than the instantaneous one, occurs, so that the instantaneous over-current tolerance thereof is enhanced. In addition, the assembly of the fusing device is simplified with reduced cost.

### BRIEF DESCRIPTION OF THE DRAWINGS

Exemplary embodiments of the present disclosure will be described in detail based on the following figures in which:
Fig. 1 is an exploded view of a fusing device according to an embodiment of the present disclosure;
Fig. 2 is a perspective view of a fusing device according to an embodiment of the present disclosure;
Fig. 3(a) is a front view of a fusing device according to an embodiment of the present disclosure;
Fig. 3(b) is a section view along a line A-A shown in Fig. 3(a);
Fig. 4(a) is a front view of a fusing device according to another embodiment of the present disclosure;
Fig. 4(b) is a section view along a line B-B shown in Fig. 4(a);
Fig. 5 is an enlarged view of part C shown in Fig. 4(b); and
Fig. 6 is a schematic view of a battery assembly comprising a fusing device according to an embodiment of the present disclosure.

### DETAILED DESCRIPTION

It will be appreciated by those of ordinary skill in the art that the disclosure may be embodied in other specific forms without departing from the essential character thereof. The presently disclosed embodiments are therefore considered in all respects to be illustrative and not restrictive.

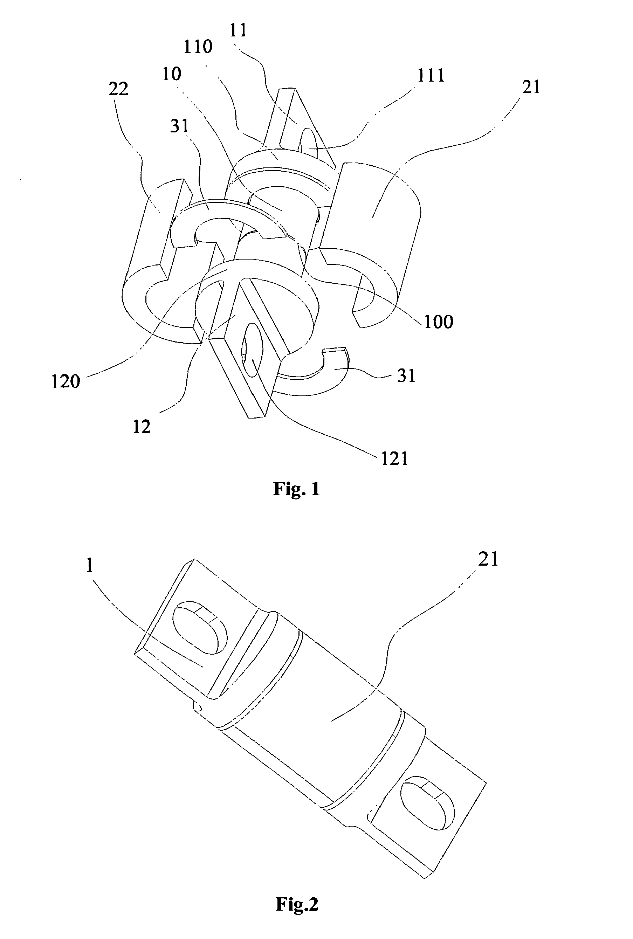

In the following, a fusing device will be described in detail with reference to the accompanying figures, in which Fig. 1 is an exploded view of a fusing device according to an embodiment of the present disclosure and Fig. 2 is a perspective view of a fusing device according to an embodiment of the present disclosure. As shown in Figs. 1 and 2, the fusing device may comprise: a core portion 10 formed with a first flange 110 at an end and a second flange 120 at the other end; a first terminal 11 electrically connected with the end of the core portion 10 where the first flange 110 is formed; a second terminal 12 electrically connected with the other end of the core portion 10 where the second flange 120 is formed; and at least a thermal expanding element 21, 22 provided between the first flange 110 and the second flange 120 with two ends thereof against the first and second flanges 110, 120 respectively, which is configured to break the core portion 10 during thermal expanding.

According to an embodiment of the present disclosure, as shown in Fig. 1, there are two thermal expanding elements 21, 22 which have a semi-cylindrical shape, like a semi-shaped sheath, that fitted over the core portion 10.

According to an embodiment of the present disclosure, the core portion 10 may have a rectangular, circular or a triangular cross section. For example, as shown in Figs. 1 and 2, the core portion 10 is a cylindrical body, and the cross section thereof is circular. According to an embodiment of the present disclosure, the core portion 10 is made from silver, copper, copper alloy, aluminum, or aluminum alloy. The conductivity and the cross section of the core portion 10 may be designed according to the actual need of the over-current capacity.

As described above, the thermal expanding elements 21, 22 may be prefixed between the first flange 110 and the second flange 120, in which both ends of the thermal expanding elements 21, 22 push against the first flange 110 and the second flange 120 respectively. The thermal expanding elements 21, 22 are made from linear thermal expansion material, which may restore in shape and length after the heating temperature is higher than transition temperature of the material. In one instance, the linear thermal expansion material may have an expansion ratio of about 8% to about 10%. And the expanding force is configured to break the core portion 10 as designed. It should be noted that terminology "linear thermal expanding material" means any material which may restore in shape and length by expansion after the environmental temperature reaches the transitional temperature of the material rather than limited by those only disclosed herein.

According to an embodiment of the present disclosure, the thermal expanding elements 21, 22 between the first and second flanges 110, 120 are made from a linear thermal expansion material, which may expand and push the first and second flanges 110, 120 with an increasing linear force while heated by over-current. When the strength of the core portion 10 is exceeded by the expanding forces generated between the first and the second flanges 110, 120, the core portion 10 may be fractured to break the electrical connection accordingly.

In some embodiments, the fusing device may further comprise a first insulating member 30 provided between the core portion 10 and the thermal expanding elements 21, 22, which is electrically insulated and thermally conductive, and a pair of second insulating members 31 provided between both ends of the thermal expanding elements 21, 22 and the first and second flanges 110, 120 respectively. It should be noted here that the first insulating member 30 and the second insulating members 31 are formed to enhance the thermal conduction between the core portion 10 and the thermal expanding elements 21, 22 without electrical conduction therebetween. Thus, any means or method achieving the same is applicable in the present disclosure, which shall be included in the scope of the present disclosure.

As shown in Fig. 1, according to an embodiment of the present disclosure, the first insulating member 30 may be an insulating layer coated onto the core portion 10, or an injected portion between the thermal expanding elements 21, 22 and the core portion 10.

According to an embodiment of the present disclosure, the second insulating member 31 is a gasket or an insulating ring, or an insulating layer formed on the first or/and second flange(s) 110, 120. In one example, aluminum nitride or thermal conductive adhesion may be coated onto the external surfaces of the core portion 10 and the first or/and second flanges 110, 120.

According to another embodiment of the present disclosure, the second insulating member 31 may comprise a pair of semi-circular gaskets or insulating rings adhesively connected with each other between the first and second flanges 110, 120 and the thermal expanding elements 21, 22. In addition, the thermal expanding elements 21, 22 may be integrally connected by welding, bonding, or fastening. The core portion 10 is sealed by the thermal expanding elements 21, 22 and the first insulating member 30, and it may endure the shock of peak value pulse current, i.e. instantaneous over-current, and electric arcs commonly occurred may be avoided in the fusing device according to the present disclosure.

In some embodiments, the linear thermal expansion material may be selected from a group consisting of Cu-based shape-memory alloy, Fe-based shape-memory alloy, Ni-based shape-memory alloy, and shape-memory ceramics. Obviously, when the linear thermal expansion material is selected from metal or alloy, the insulating one is preferable whereas when the linear thermal expansion material is selected from non-metallic material such as ceramics, insulating property of the material is not needed. It may be well understood by one skilled in the art that the core portion 10 and the thermal expanding elements 21, 22 are not mutually electrical conductive in the present disclosure. According to an embodiment of the present disclosure, insulation treatment between the core portion 10 and the thermal expanding elements 21, 22 may be performed when the thermal expanding elements 21, 22 are made from metal or alloy.

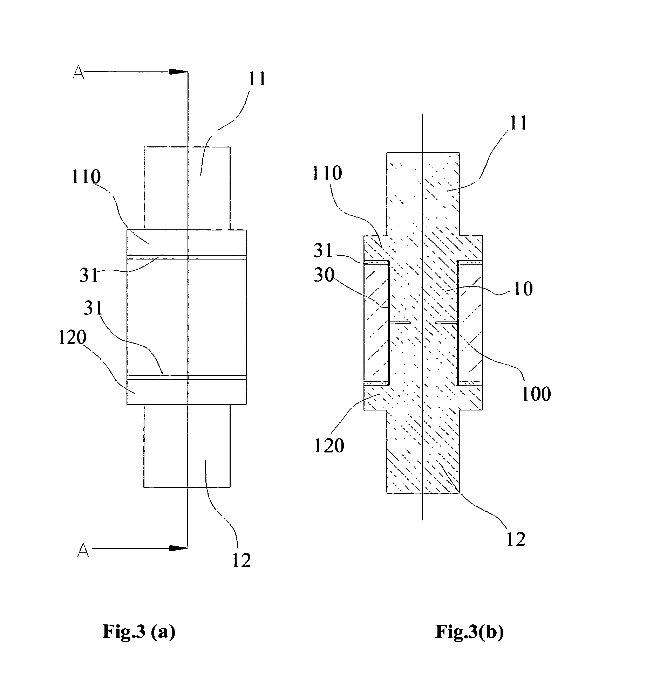

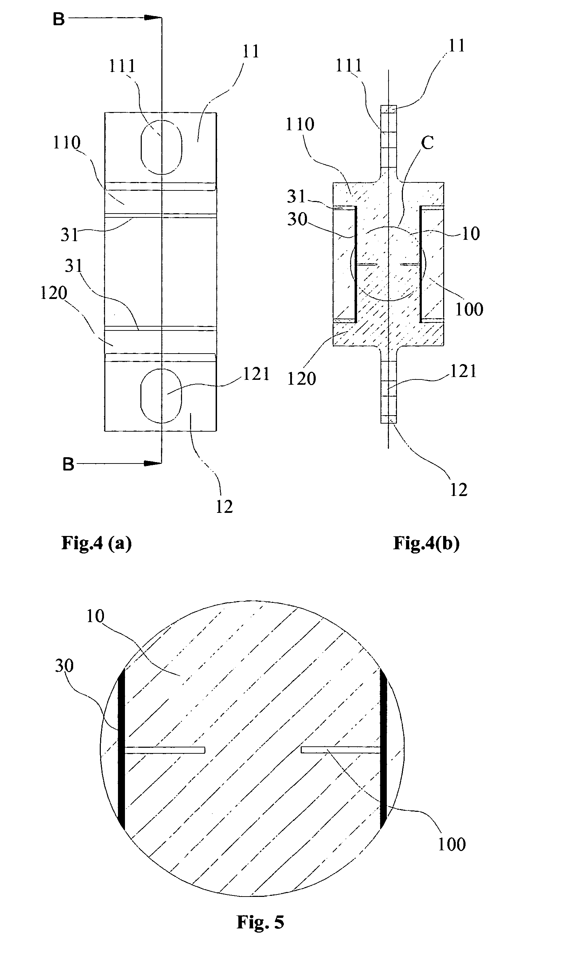

As shown in Fig. 5, the core portion 10 may be formed with at least a notch 100. According to an embodiment of the present disclosure, the notch is formed along a cross section in the middle portion of the core portion 10, as shown in Figs. 3(b) and 4(b), with a depth of about 1.5 mm to about 3 mm into the core portion 10 and a height of about 0.1 mm to about 0.5 mm in a longitudinal direction of the core portion 10.

The first and second terminals 11, 12 are the electrical connection terminals when the fusing device is connected into the circuit. In one instance, the first or second terminal 11, 12 may have a through hole for connecting. As shown in Fig 1, 2, 4(a) and 4(b), through holes 111, 121 may be formed on the first terminal 11 and the second terminal 12 respectively.

Normally, the over-current response rate of the fusing device depends on the conductivity of the core portion 10 and the transition temperature of the thermal expanding elements 21, 22. To increase the over-current response rate, the cross section of the core portion 10 may be reduced to increase the temperature rise speed, or the transition temperature of the thermal expanding elements 21, 22 may be reduced to reduce the over-current response time. Conversely, to reduce the response rate or increase the over-current response time, the cross section of the core body 10 may be increased or the transition temperature of the thermal expanding elements 21, 22 may be increased.

According to an embodiment of the present disclosure, the fusing device may have a designed over-current capacity of about 300A, the diameter of the core portion 10 may be about 6 mm to about 9 mm; the length of the core portion 10 may be about 15 mm to about 20 mm, the height of the notches along the longitudinal direction of the core body 10 may be about 0.1 mm to about 0.5 mm; the depth of the notches into the core body 10 may be about 1.5 mm to about 3 mm, and the transition temperature of the thermal expanding elements 21, 22 may be about 100 °C to about 130 °C, the thermal expanding elements 21, 22 may have an expansion rate of about 8% and the expanding lengths of the thermal expanding elements 21, 22 may be about 1.2 mm to about 1.6 mm. When the electrical connection is cut off, the separated width of the notch 100 may be about 1.1 mm to about 1.5 mm when the fusing device functions to ensure that there is no breakdown up to the voltage of 1000V.

In the following, the working process of the fusing device will be described briefly. Normally, the core portion 10 is heated by the current, part of the heat is transferred to the linear thermal expansion material such as shape-memory alloy, and the temperature of the shape-memory alloy is increased. Under normal condition, the temperature rise of the shape-memory alloy is lower than 30 Celsius degree, and the total temperature is lower than the transition temperature of the shape-memory alloy, thus the shape-memory alloy has no deformation. During short-circuiting, due to the large current, the temperatures of the core portion 10 and the shape-memory alloy are increased quickly, the shape-memory alloy is deformed to fracture the core portion 10 when the temperature reaches up to and above the transition temperature whereas the length change of the shape-memory alloy is confined by the first flange 110 and the second flat portion 120. Because the material will restore the shape and the length thereof by expansion, a large restoring force will be generated between the first flange 110 and the second flange 120. And when the restoring or deforming force of the thermal expanding elements 21, 22 is big enough to overcome the yield limit of the core portion 10, the core portion 10 may be fractured at the weakest region, i.e., the notches 100, and then the electrical connection between the first terminal 11 and the second terminal 12 is broken.

With the fusing device as described above, the internal resistance thereof and the over-current response time are optimal in addition to enhanced endurance to shock of pulse current. Further, electric arcs are avoided in the fusing device of the present disclosure.

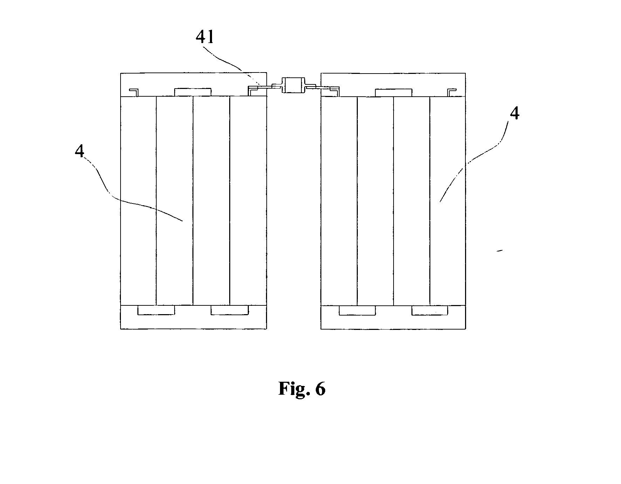

According to an embodiment of the present disclosure, a battery assembly comprising a plurality of batteries electrically connected in series, in parallel or in series and parallel with the fusing device as described hereinabove is shown in Fig. 6.

As shown in Fig. 6, the first or second terminal 11, 12 may have through holes 111, 112 for connecting batteries. The batteries 4 may have terminals 41; the fusing device may be connected between the terminals 41, and the connection therebetween may be formed by welding, threaded connection, or plug-switch etc.

Many modifications and other embodiments of the present disclosure will come to mind to one skilled in the art to which the present disclosure pertains having the benefit of the teachings presented in the foregoing description. It will be apparent to those skilled in the art that variations and modifications of the present disclosure may be made without departing from the scope of the present disclosure. Therefore, it is to be understood that the invention is not to be limited to the specific embodiments disclosed and that modifications and other embodiments are intended to be included within the scope of the appended claims.

## Claims

1. A fusing device comprising:
a core portion (10) formed with a first flange (110) at an end thereof and a second flange (120) at the other end thereof ;
a first terminal (11) electrically connected with the end of the core portion (10) where the first flange (110) is formed;
a second terminal (12) electrically connected with the other end of the core portion (10) where the second flange (120) is formed; and
at least a thermal expanding element (21, 22) provided between the first flange (110) and the second flange (120) with two ends thereof against the first and second flanges respectively, which is configured to break the core portion (10) during thermal expanding,
wherein the thermal expanding element (21, 22) is made from a linear thermal expansion material which is a shape-memory alloy or shape memory ceramics restorable in shape after a transition temperature thereof is reached.

2. The fusing device of claim 1, wherein there are two thermal expanding elements (21, 22) which have a semi-cylindrical shape that fitted over the core portion (10).

3. The fusing device of claim 1, wherein the linear thermal expansion material is one selected from a group consisting of Cu-based shape-memory alloy, Fe-based shape-memory alloy, Ni-based shape-memory alloy, and shape-memory ceramics.

4. The fusing device of claim 1, wherein the linear thermal expansion material has an expansion ratio of 8% to 10%.

5. The fusing device of claim 1, wherein the core portion (10) is made from material selected from a group consisting of silver, copper, copper alloy, aluminum, or aluminum alloy.

6. The fusing device of claim 1, wherein, the core portion (10) has a rectangular or circular cross section.

7. The fusing device of claim 1, wherein the core portion (10) is formed with at least a notch (100).

8. The fusing device of claim 7, wherein the notch (100) is formed along a cross section in the middle portion of the core portion (10) with a depth of about 1.5 mm to about 3 mm into the core portion (10) and a height of about 0.1 mm to about 0.5 mm along a height of the core portion (10).

9. The fusing device of claim 1, wherein the first and the second terminals (11, 12) are formed with a through hole (111, 121) respectively.

10. The fusing device of claim 1, further comprising:
a first insulating member (30) provided between the core portion (10) and the thermal expanding element (21, 22), which is electrically insulated and thermally conductive, and
a pair of second insulating members (31) provided between both ends of the thermal expanding element (21, 22) and the first and second flanges (110, 120) respectively.

11. The fusing device of claim 10, wherein the first insulating member (30) is an insulating layer formed on the core portion (10), or an injected portion formed on the core portion (10).

12. The fusing device of claim 10, wherein the second insulating member (31) is formed of a pair of semi-circular insulating rings or is an insulating layer formed on a surface facing the thermal expanding element (21, 22).

13. The fusing device of claim 11 or 12, wherein the insulating layer has a thickness of 0.05 mm to 0.2 mm.

14. A battery assembly comprising a plurality of batteries electrically connected in series, parallel or in series and parallel with the fusing device of one of claims 1 to 13.

## Patentansprüche

1. Sicherungsvorrichtung, aufweisend:
einen Kernabschnitt (10), der mit einem ersten Flansch (110) an einem Ende des Kernabschnitts (10) ausgebildet ist und mit einem zweiten Flansch (120) am anderen Ende des Kernabschnitts (10) ausgebildet ist;
einen ersten Anschluss (11), der mit dem Ende des Kernabschnitts (10), an dem der erste Flansch (110) ausgebildet ist, elektrisch verbunden ist;
einen zweiten Anschluss (12), der mit dem anderen Ende des Kernabschnitts (10), an dem der zweite Flansch (120) ausgebildet ist, elektrisch verbunden ist; und
zumindest ein Wärmeausdehnungselement (21, 22), das zwischen dem ersten Flansch (110) und dem zweiten Flansch (120) bereitgestellt wird, wobei zwei Enden des Wärmeausdehnungselements (21, 22) jeweils am ersten und zweiten Flansch anstoßen, und das konfiguriert ist, den Kernabschnitt (10) während einer Wärmeausdehnung zu brechen,
wobei das Wärmeausdehnungselement (21, 22) aus einem Material mit linearer Wärmeausdehnung hergestellt ist, das eine Formgedächtnislegierung oder Formgedächtniskeramik ist, die nach Erreichen einer Übergangstemperatur derselben wieder ihre ursprüngliche Form annehmen kann.

2. Sicherungsvorrichtung nach Anspruch 1, wobei zwei Wärmeausdehnungselemente (21, 22) vorhanden sind, die eine halbzylindrische Form aufweisen, die über den Kernabschnitt (10) passt.

3. Sicherungsvorrichtung nach Anspruch 1, wobei das Material mit linearer Wärmeausdehnung ein Material ist, das aus einer Gruppe bestehend aus einer Cu-basierten Formgedächtnislegierung, einer Fe-basierten Formgedächtnislegierung, einer Ni-basierten Formgedächtnislegierung und einer Formgedächtniskeramik ausgewählt ist.

4. Sicherungsvorrichtung nach Anspruch 1, wobei das Material mit linearer Wärmeausdehnung ein Ausdehnungsverhältnis von 8% bis 10% aufweist.

5. Sicherungsvorrichtung nach Anspruch 1, wobei der Kernabschnitt (10) aus einem Material hergestellt ist, das aus einer Gruppe bestehend aus Silber, Kupfer, einer Kupferlegierung, Aluminium oder einer Aluminiumlegierung ausgewählt ist.

6. Sicherungsvorrichtung nach Anspruch 1, wobei der Kernabschnitt (10) einen rechteckigen oder kreisförmigen Querschnitt aufweist.

7. Sicherungsvorrichtung nach Anspruch 1, wobei der Kernabschnitt (10) mit zumindest einer Kerbe (100) ausgebildet ist.

8. Sicherungsvorrichtung nach Anspruch 7, wobei die Kerbe (100) entlang eines Querschnitts im mittleren Abschnitt des Kernabschnitts (10) mit einer Tiefe von etwa 1,5 mm bis etwa 3 mm in den Kernabschnitt (10) hinein und einer Höhe von etwa 0,1 mm bis etwa 0,5 mm entlang einer Höhe des Kernabschnitts (10) ausgebildet ist.

9. Sicherungsvorrichtung nach Anspruch 1, wobei der erste und der zweite Anschluss (11, 12) jeweils mit einem Durchgangsloch (111, 121) ausgebildet sind.

10. Sicherungsvorrichtung nach Anspruch 1, weiterhin aufweisend:
ein erstes Isolationselement (30), das zwischen dem Kernabschnitt (10) und dem Wärmeausdehnungselement (21, 22) bereitgestellt wird und elektrisch isoliert und wärmeleitend ist, und
ein Paar zweiter Isolationselemente (31), die jeweils zwischen beiden Enden des Wärmeausdehnungselements (21, 22) und dem ersten und zweiten Flansch (110, 120) bereitgestellt werden.

11. Sicherungsvorrichtung nach Anspruch 10, wobei das erste Isolationselement (30) eine Isolierschicht, die auf dem Kernabschnitt (10) ausgebildet ist, oder ein injizierter Abschnitt ist, der auf dem Kernabschnitt (10) ausgebildet ist.

12. Sicherungsvorrichtung nach Anspruch 10, wobei das zweite Isolationselement (31) aus einem Paar halbkreisförmiger Isolierringe ausgebildet ist oder eine Isolierschicht ist, die auf einer Oberfläche ausgebildet ist, die dem Wärmeausdehnungselement (21, 22) zugewandt ist.

13. Sicherungsvorrichtung nach Anspruch 11 oder 12, wobei die Isolierschicht eine Dicke von 0,05 mm bis 0,2 mm aufweist.

14. Batterieanordnung, aufweisend eine Vielzahl von Batterien, die elektrisch in Reihe, parallel oder in Reihe und parallel mit der Sicherungsvorrichtung nach einem der Ansprüche 1 bis 13 geschaltet sind.

## Revendications

1. Dispositif fusible, comprenant :
une partie (10) de noyau formée avec une première bride (110) située à une extrémité de la partie (10) de noyau et une deuxième bride (120) située à l'autre extrémité de la partie (10) de noyau;
une première borne (11) connectée électriquement à l'extrémité de la partie (10) de noyau où la première bride (110) est formée ;
une deuxième borne (12) connectée électriquement à l'autre extrémité de la partie (10) de noyau où la deuxième bride (120) est formée ; et
au moins un élément (21, 22) à dilatation thermique prévu entre la première bride (110) et la deuxième bride (120), deux extrémités de celui-ci étant en butée contre la première et deuxième brides, respectivement, l'élément (21, 22) à dilatation thermique étant configuré à casser la partie (10) de noyau pendant la dilatation thermique,
l'élément (21, 22) à dilatation thermique étant réalisé en un matériau à dilatation thermique linéaire qui est un alliage à mémoire de forme ou une céramique à mémoire de forme qui peut reprendre sa forme initiale après qu'une température de transition de celui-ci/celle-ci soit atteinte.

2. Dispositif fusible selon la revendication 1, dans lequel il y a deux éléments (21, 22) à dilatation thermique qui ont une forme semi-cylindrique qui s'adapte sur la partie (10) de noyau.

3. Dispositif fusible selon la revendication 1, dans lequel le matériau à dilatation thermique linéaire est un matériau sélectionné dans un groupe constitué d'un alliage à mémoire de forme à base de Cu, un alliage à mémoire de forme à base de Fe, un alliage à mémoire de forme à base de Ni, et des céramiques à mémoire de forme.

4. Dispositif fusible selon la revendication 1, dans lequel le matériau à dilatation thermique a un taux de dilatation de 8% à 10%.

5. Dispositif fusible selon la revendication 1, dans lequel la partie (10) de noyau est réalisée en un matériau sélectionné dans un groupe constitué d'argent, cuivre, un alliage de cuivre, aluminium, ou un alliage d'aluminium.

6. Dispositif fusible selon la revendication 1, dans lequel la partie (10) de noyau a une section transversale rectangulaire ou circulaire.

7. Dispositif fusible selon la revendication 1, dans lequel la partie (10) de noyau est formée avec au moins une encoche (100).

8. Dispositif fusible selon la revendication 7, dans lequel l'encoche (100) est formée le long d'une section transversale dans la partie centrale de la partie (10) de noyau en ayant une profondeur d'environ 1,5 mm à environ 3 mm dans la partie (10) de noyau et en ayant une hauteur d'environ 0,1 mm à environ 0,5 mm le long d'une hauteur de la partie (10) de noyau.

9. Dispositif fusible selon la revendication 1, dans lequel la première et la deuxième bornes (11, 12) sont formées avec un trou traversant (111, 121), respectivement.

10. Dispositif fusible selon la revendication 1, comprenant en outre :
un premier membre (30) isolant prévu entre la partie (10) de noyau et l'élément (21, 22) à dilatation thermique qui est isolé électriquement et thermiquement conducteur, et
une paire de deuxièmes membres (31) isolants prévus entre les deux extrémités de l'élément (21, 22) à dilatation thermique et la première et deuxième bride (110, 120), respectivement.

11. Dispositif fusible selon la revendication 10, dans lequel le premier membre (30) isolant est une couche isolante formée sur la partie (10) de noyau, ou une partie injectée formée sur la partie (10) de noyau.

12. Dispositif fusible selon la revendication 10, dans lequel le deuxième membre (31) isolant est formé par des anneaux isolants semi-circulaires ou est une couche isolante formée sur une surface faisant face à l'élément (21, 22) à dilatation thermique.

13. Dispositif fusible selon les revendications 11 ou 12, dans lequel la couche isolante a une épaisseur de 0,05 mm à 0,2 mm.

14. Ensemble de batterie comprenant une pluralité de batteries connectées électriquement en série, en parallèle, ou en série et en parallèle, au dispositif fusible selon l'une des revendications 1 à 13.
